# EUROPEAN PATENT APPLICATION

(11) **EP 4 576 397 A1**
(43) Date of publication of application: **25.06.2025**
(21) Application number: 24206962.3
(22) Date of filing: 16.10.2024
(51) Int. Cl.: H01M 50/503

(54) **BATTERY MODULE AND BATTERY MODULE COLLECTION MECHANISM**

(30) Priority: 18.12.2023 CN 202311749998; 18.12.2023 CN 202323464344 U; 30.04.2024 WO PCT/CN2024/090978
(71) Applicant: Eve Energy Co., Ltd., Huizhou, Guangdong 516006 (CN)
(72) Inventor: LI, Caiyu, Huizhou, Guangdong, 516006 (CN)
(74) Representative: Murgitroyd & Company

(57) **Abstract**

A battery module and a battery module collection mechanism (1) are provided. The battery module collection mechanism (1) includes: a bracket (3); and a collection group (100) including a serial assembly (110) and a collection assembly (120); where the serial assembly (110) includes a first serial group (11) and a second serial group (12) both installed on the bracket (3), the first serial group (11) and the second serial group (12) each include a first serial row (101) and a second serial row (102), and each of the first serial group (11) and the second serial group (12) corresponds to one cell group (51); the collection assembly (120) includes a first collection line (13) and a second collection line (14); and two first serial rows (101) of the first serial group (11) and the second serial group (12) are electrically connected to the first collection line (13), and two second serial rows (102) of the first serial group (11) and the second serial group (12) are electrically connected to the second collection line (14).

## Description

### TECHNICAL FIELD

The present disclosure relates to the field of battery technologies, and more particular to a battery module and a battery module collection mechanism.

### BACKGROUND

In the related art, a Cells Contact System (CCS) assembly of a battery system may be configured to collect a cell signal, and then monitoring of the signal may be performed through a Cell Supervision Circuit (CSC) assembly corresponding to the CCS assembly, and finally related information may be transmitted to a Battery Management System (BMS), which in turn controls a cell voltage. The CCS assembly of each battery module corresponds to one CSC assembly, which causes the harnesses of the integrated battery modules to be complicated and the CSC assemblies of a plurality of battery modules to occupy installation positions between the battery modules, thereby reducing energy density.

### SUMMARY

The present disclosure provides a battery module and a battery module collection mechanism, which can improve the low energy density after integration of multiple battery modules.

In a first aspect, embodiments of the present disclosure provide a battery module collection mechanism, including: a bracket; and a collection group including a serial assembly and a collection assembly; where the serial assembly includes a first serial group and a second serial group both installed on the bracket, the first serial group and the second serial group each include a first serial row and a second serial row arranged oppositely in a first direction perpendicular to a second direction in which the first serial group and the second serial group is arranged, and each of the first serial group and the second serial group corresponds to one cell group; the collection assembly includes a first collection line and a second collection line each installed on the bracket and arranged oppositely in a direction in which the first collection line and the second collection line is arranged; and two first serial rows of the first serial group and the second serial group are located at a side of the first collection line away from the second collection line and electrically connected to the first collection line, and two second serial rows of the first serial group and the second serial group are located at a side of the second collection line away from the first collection line and electrically connected to the second collection line.

In a second aspect, embodiments of the present disclosure provide a battery module, including: two or more battery grouping assemblies, and the above-described battery module collection mechanism provided in a number corresponding to a number of the battery grouping assemblies, where each of the battery grouping assemblies includes two cell groups electrically connected to a first serial group and a second serial group of a serial assembly, respectively, and the serial assembly further includes a first connection member for connecting the first serial group and the second serial group, and where the first connector is configured to connect the two cell groups in series.

### Beneficial Effects

The beneficial effects of the present disclosure are as follows: the present disclosure provides a battery module collection mechanism which integrates the first serial group corresponding to one cell group with the second serial group corresponding to another cell group on the same bracket, and enables the first serial rows of the first serial group and the second serial group to share the first collection line and the second serial rows of the first serial group and the second serial group to share the second collection line, so that the purpose of integrating original two battery modules into one battery module is achieved, and the use of the collection lines and the CSC assembly after integration of the battery modules in the related art is reduced, thereby improving the space utilization rate and the energy density.

The present disclosure provides a battery module, including: two or more battery grouping assemblies, and the above-described battery module collection mechanism provided in a number corresponding to a number of the battery grouping assemblies, which can integrate original two battery modules into one battery module, thereby reducing the use of the collection lines and the CSC assembly after integration of the battery modules in the related art and improving the space utilization rate and the energy density.

### DESCRIPTION OF THE DRAWINGS

FIG. 1 is a schematic diagram of installation of two first collection mechanisms according to some embodiments of the present disclosure.
FIG. 2 is an enlarged view of a portion A in FIG. 1.
FIG. 3 is a perspective diagram of a collection assembly according to some embodiments of the present disclosure.
FIG. 4 is an enlarged view of a portion B in FIG. 3.
FIG. 5 is a perspective diagram of a first connection member and a second connection member according to some embodiments of the present disclosure.
FIG. 6 is a perspective diagram of a bracket according to some embodiments of the present disclosure.
FIG. 7 is a schematic structural diagram of a cell grouping assembly according to some embodiments of the present disclosure.

### REFERENCE NUMERALS OF THE ACCOMPANYING DRAWING:

1. Battery module collection mechanism; 100. Collection group; 110. Serial assembly; 11. First serial group; 12. Second serial group; 101. First serial row; 102. Second serial row; 120. Collection assembly; 13. First collection line; 131. First connection portion; 132. First buffer portion; 133. First groove; 14. Second collection line; 141. Second connection portion; 142. Second buffer portion; 143. Second groove; 21. First connection member; 22. First integrated member; 23. Second integrated member; 24. Protrusion; 25. Recess; 3. Bracket; 31. Collection line installing groove; 32. Connection member installing groove; 4. Connection circuit board; 5. Cell grouping assembly; 51. Cell group.

### DETAILED DESCRIPTION

In description of the present disclosure, it should be noted that the terms "interconnection", "connection" and "fixing" should be understood in a broad sense, unless otherwise clearly specified and defined. For example, "fixing" can be a fixed connection, a detachable connection, or integrated connection. It can be a mechanical connection or an electrical connection. It can be directly connected or indirectly connected through an intermediary. It can also be the connection between two elements or the interaction between two elements. Those ordinary skilled in the art can understand the specific meanings of the above terms in the present disclosure according to specific situations.

In the present disclosure, it should he noted that unless otherwise clearly defined and limited, a first feature "on" or "under" a second feature may mean that the first feature directly contacts the second feature, or that the first feature contacts the second feature via an additional feature there between instead of directly contacting the second feature. Moreover, the first feature "on", "above", and "over" the second feature may mean that the first feature is right over or obliquely upward over the second feature or mean that the first feature has a horizontal height higher than that of the second feature. The first feature "under", "below", and "beneath" the second feature may mean that the first feature is right beneath or obliquely downward beneath the second feature or mean that horizontal height of the first feature is lower than that of the second feature.

In the description of the present embodiments, orientations or position relationships indicated by the terms "upper", "lower", "left", and "right" are based on orientations or position relationships illustrated in the drawings. The terms are used to facilitate and simplify the description and operations of the present disclosure, rather than indicate or imply that the devices or elements referred to herein are required to have specific orientations or be constructed or operate in the specific orientations. Accordingly, the terms should not be construed as limiting the present disclosure. In addition, the terms "first" and "second" are used solely for the purpose of distinguishing elements in terms of description of the elements and not in a particular sense.

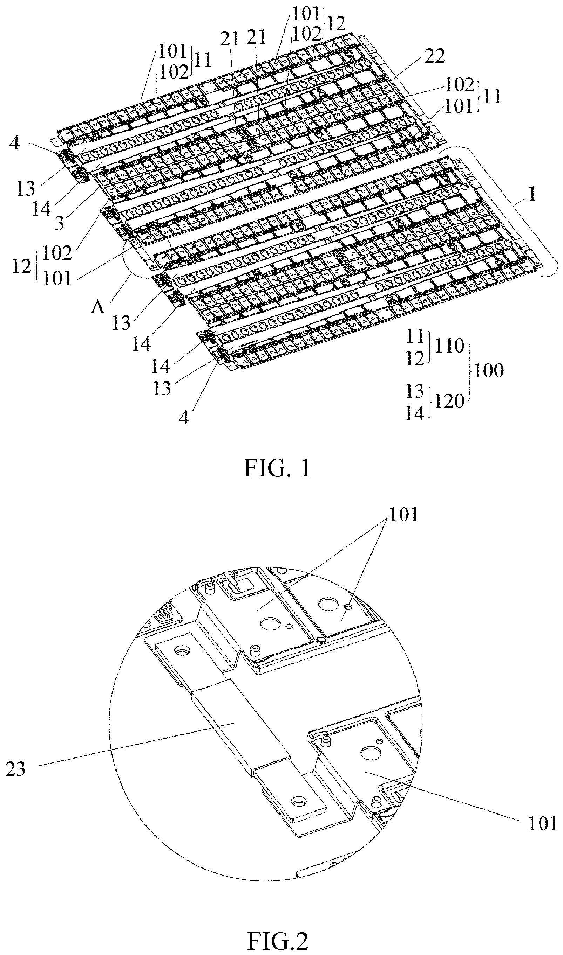

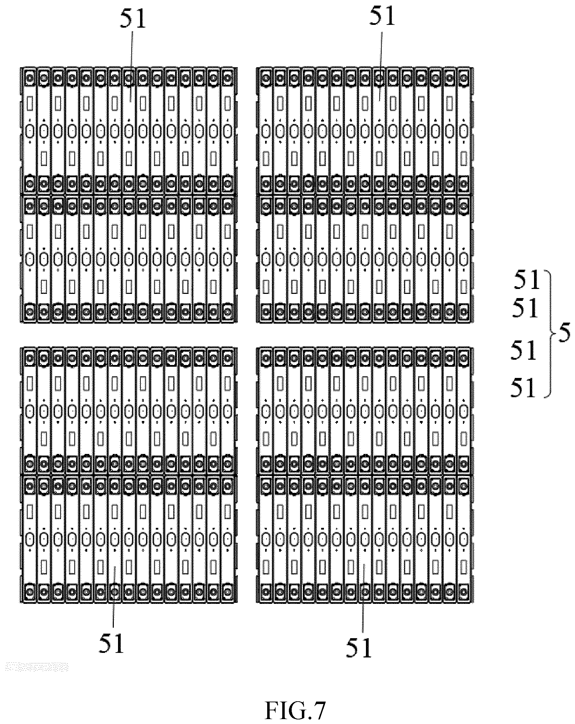

Referring to FIGS. 1 and 7, a battery module collection mechanism 1 provided in the embodiments of the present disclosure may include: a bracket 3; and a collection group 100 including a serial assembly 110 and a collection assembly 120; where the serial assembly 110 includes a first serial group 11 and a second serial group 12 both installed on the bracket 3, the first serial group 11 and the second serial group 12 each include a first serial row 101 and a second serial row 102 arranged oppositely in a first direction perpendicular to a second direction in which the first serial group 11 and the second serial group 12 is arranged, and each of the first serial group 11 and the second serial group 12 corresponds to one cell group 51; and the collection assembly 120 includes a first collection line 13 and a second collection line 14 each installed on the bracket 3 and arranged oppositely in a direction in which the first collection line 13 and the second collection line 14 is arranged; and where two first serial rows 101 of the first serial group 11 and the second serial group 12 are located at a side of the first collection line 13 away from the second collection line 14 and electrically connected to the first collection line 13, and two second serial rows 102 of the first serial group 11 and the second serial group 12 are located at a side of the second collection line 14 away from the first collection line 13 and electrically connected to the second collection line 14.

Firstly, the first serial row 101 and the second serial row 102 may be provided on the same bracket 3, so that the cell groups 51 corresponding to the first serial row 101 and the second serial row 102 can be mounted more closely, thereby improving the space utilization rate. Secondly, the two first serial rows 101 of the first serial row 101 and the second serial row 102 share the first collection line 13, and the two second serial rows 102 of the first serial row 101 and the second serial row 102 share the second collection line 14, so that the use of the collection lines is reduced on the basis of the related art, thereby further reducing the use of the CSC assemblies to further save the use space, and improving the space energy density.

Referring to FIGS. 1 and 7, a battery module collection mechanism 1 provided in the embodiments of the present disclosure may include: a bracket 3; and a collection group 100. The collection group 100 may include a serial assembly 110 and a collection assembly 120.

The serial assembly 110 may include a first serial group 11, a second serial group 12, and a first connection member 21 all installed on the bracket 3.

The collection assembly 120 may include a first collection line 13 and a second collection line 14 that both are installed on the bracket 3 and arranged oppositely in a direction in which the first collection line 13 and the second collection line 14 is arranged.

The first serial group 11 may be configured to be connected in series with one cell group 51, and the second serial group 12 may be configured to be connected in series with another cell group 51. The first serial group 11 and the second serial group 12 may each include a first serial row 101 and a second serial row 102 arranged oppositely in a first direction perpendicular to a second direction in which the first serial group 11 and the second serial group 12 is arranged. The first serial row 101 and the second serial row 102 may be provided in the same number, the first serial row 101 and the second serial row 102 may be both configured to connect positive and negative electrodes of adjacent cells, and the first serial row 101 and the second serial row 102 may be configured to connect the positive and negative electrodes of the same cell. The first connection member 21 may be disposed between the first serial group 11 and the second serial group 12 and configured to connect two second serial rows 102 of the first serial group 11 and the second serial group 12 in series, and further connects cell groups 51 corresponding to the first serial group 11 and the second serial group 12 in series, thereby realizing integration of the cell group 51 corresponding to the first serial group 11 with the cell group 71 corresponding to the second serial group 12.

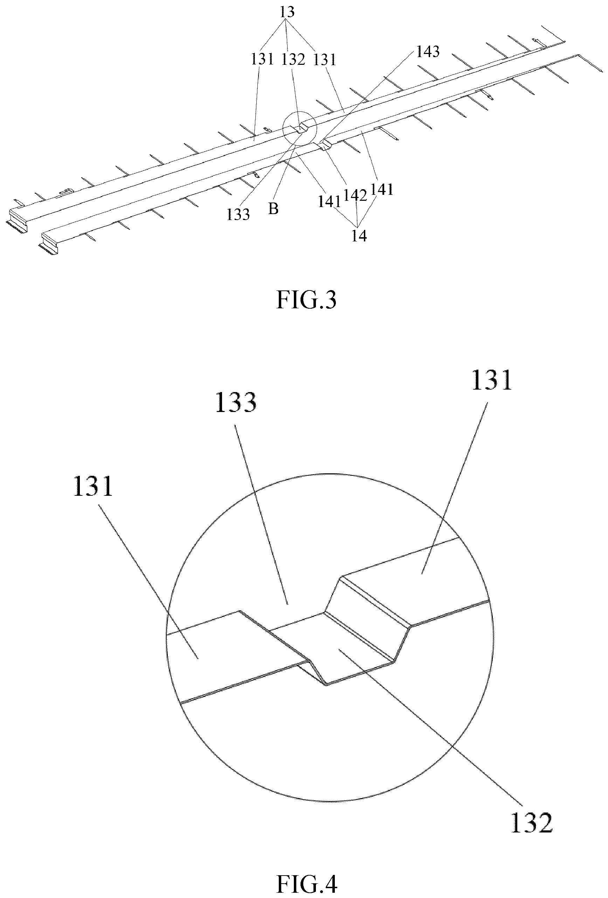

Referring to FIGS. 1 and 3, the first collection line 13 and the second collection line 14 may be positioned between the first serial row 101 and the second serial row 102, the first collection line 13 may be electrically connected to the two first serial rows 101 of the first serial group 11 and the second serial group 12, and the second collection line 14 may be electrically connected to the two second serial rows 102 of the first serial group 11 and the second serial group 12. The first collection line 13 and the second collection line 14 may be configured to collect voltage and temperature signals and the like of the corresponding cell groups 51.

The serial assembly 110 may further include two connection circuit boards 4 respectively connected to the first collection line 13 and the second collection line 14, where the two connection circuit boards 4 may be provided at one ends of the first collection line 13 and the second collection line 14, respectively, so as to facilitate connection with connectors of the CSC assembly.

Referring to FIGS. 3 and 4, the first collection line 13 may include two first connection portions 131 and a first buffer portion 132 connected between the two first connection portions 131. The two first connection portions 131 may be connected to the two first serial rows 101 of the first serial group 11 and the second serial group 12, respectively, and the first buffer portion 132 may be provided with a first groove 133 facing the bracket 3. In an extension direction of the first collection line 13, a distance between the first groove 133 and the first serial row 101 of the first serial group 11 may be equal to a distance between the first groove 133 and the first serial row 101 of the second serial group 12.

The second collection line 14 may include two second connection portions 141 and a second buffer portion 142 connected between the two second connection portions 141, the two second connection portions 141 may be connected to the two second serial rows 102 of the first serial group 11 and the second serial group 12, respectively, and the second buffer portion 142 may be provided with a second groove 143 facing the bracket 3. In an extension direction of the second collection line 14, a distance between the second groove 143 and the second serial row 102 of the first serial group 11 may be equal to a distance between the second groove 143 and the second serial row 102 of the second serial group 12. As such, the first groove 133 and the second groove 143 both may be positioned between the first serial row 101 and the second serial row 102. When a cell of a battery module emits heat and is expanded, a tension force to which the two first connection portions 131 and the two second connection portions 141 are subjected from the cell is made as equal as possible, thereby enabling the first buffer portion 132 and the second buffer portion 142 to be stretched to a large extent to better adapt to expansion of the cell.

A virtual connection line between the center of the first groove 133 and the center of the second groove 143 may be perpendicular to the extension direction of the first collection line 13, so that extension directions of the first buffer portion 132 and the second buffer portion 142 are the same as each other.

A cell expansion amount may be calculated by model simulation. For example, when the cell expansion amount is 1.5 mm, the lengths of the first buffer portion 132 and the second buffer portion 142 are twice the cell expansion amount, that is, 3.0 mm.

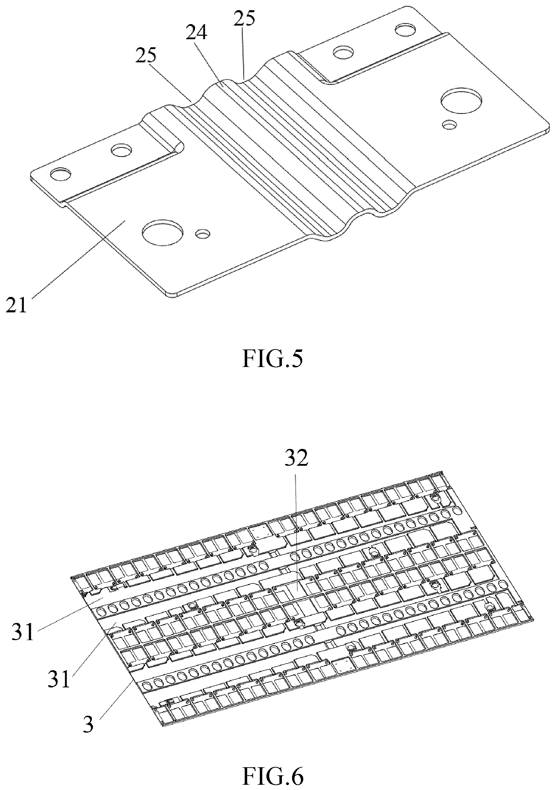

Referring to FIGS. 1 and 5, the first connection member is each provided with a protrusion 24 away from the bracket 3 and two recesses 25 on both sides of the protrusion 24, where the two recesses 25 are recessed toward the bracket 3, so that the first connection member 21 may have a W-shaped-like structure. When the cell emits heat and is expanded, the first connection member 21 can be expanded to accommodate the cell expansion amount. Additionally, compared with a solution in which the first connection member 21 is provided with one recess 25, the protrusion 24 may be provided between the two recesses 25, which can improve a structural strength of the first connection member 21, and prevent the first connection member 21 from being broken away as much as possible without plastic deformation. Widths and depths of the protrusion 24 and the recesses 25 may be determined according to actual cell expansion amount and a tensile force test. In the present embodiment, the size of the first connection member 21 is 114.4 mm*61 mm* 1.2 mm, and the depth of each of the recesses 25 is equal to the height of the protrusion 24, which both are 3.5 mm. In the present embodiment, the serial assembly 110 may be made of aluminum, and the bracket 3 may be made of plastic.

Referring to FIGS. 1 and 7, an embodiment of the present disclosure may further provide a battery module, including: the battery module collection mechanism 1 described in any one of the above embodiments, a cell grouping assembly 5, and an integrated connection assembly.

The battery module collection mechanism 1 may be provided in two, where the two battery module collection mechanisms 1 correspond to two cell grouping assemblies 5, respectively. The cell grouping assembly 5 may include four cell groups 51, and the collection group 100 may be provided in two, where one of the two collection groups 100 corresponds to two of the four cell groups 51. The two cell groups 51 may be electrically connected to the first serial group 11 and the second serial group 12, respectively, and the integrated connection assembly may include a first integrated member 22 and a second integrated member 23.

When the first connection member 21 may be connected to the two first serial rows 101 of the first serial group 11 and the second serial group 12, the first integrated member 22 may be connected to the two second serial rows 102 of the two collection groups 100, the two second serial rows 102 of the two first serial groups 11 of the two battery module collection mechanisms 1 may be connected to each other through the second integrated member 23, and the second integrated member 23 may be provided on one side of the first serial row 101 away from the first integrated member 22.

Alternatively, when the first connection member 21 may be connected to the two second serial rows 102 of the first serial group 11 and the second serial group 12, the first integrated member 22 may be connected to the two first serial rows 101 of the two collection groups 100, the two first serial rows 102 of the two first serial groups 11 of the two battery module collection mechanisms 1 may be connected to each other through the second integrated member 23, and the second integrated member 23 may be provided on one side of the first serial row 101 away from the first integrated member 22.

In the present embodiment, the first connection member 21 may be connected to the two second serial rows 102 of the first serial group 11 and the second serial group 12. In this case, a flow path of a current of the battery module may be as follows: in one of the collection groups 100, the current flows through the cell group 51 corresponding to the first serial group 11 via the first serial group 11 and the second serial group 12 having the first serial rows 101 connecting adjacent cells in series, and the current flows into a second serial row 102 of the second serial group 12 through the first connection member 21and flows through the cell group 51 corresponding to the second serial group 12; then the current flows into a first serial row 101 of a first serial group 11 in another of the collection groups 100 via the first integrated member 22, and flows through the cell group 51 corresponding to the first serial group 11, the current flows into a second serial row 102 of a second serial group 12 through the first connection member 21 and flows through the cell group 51 corresponding to the second serial group; and finally, the current flows into a first serial row 101 of a first serial group 11 of another battery module collection mechanism 1 through the second integrated member 23.

In other embodiments, two first connectors 21 of two collection groups 100 may connect two first serial rows 101 or two second serial rows 102, respectively.

Integration of the four cell groups 51 may be achieved by the first connection member 21 and the first integrated member 22, and the four battery modules may be integrated into one larger battery module, thereby increasing the energy density. By extending the collection line on the original basis, the number of CSC assemblies may be reduced, thereby reducing the intermediate transfer harness.

In other embodiments, the battery grouping assembly 5 may also be provided in three, four or even more, the battery module collection mechanism 1 may be provided in a number corresponding to the number of the battery grouping assemblies 5, and the collection group 100 may also be provided in three, four or even more. Cell grouping groups 5 corresponding to different battery module collection mechanisms 1 may be electrically connected through the second integrated member 23, and the different collection groups 100 may be electrically connected through the first integrated member 22.

Referring to FIG. 6, the bracket 3 may be provided with four collection line installing grooves 31 for installing collection assemblies 120 and a connection member installing groove 32 for installing the first connection member 21, and the collection line installing grooves 31 and the connection member installing groove 32 may be designed according to shapes of the collection assemblies and the connection member.

## Claims

1. A battery module collection mechanism (1), **characterized in that** the battery module collection mechanism (1) comprises:
a bracket (3); and
a collection group (100) comprising a serial assembly (110) and a collection assembly (120), wherein the serial assembly (110) comprises a first serial group (11) and a second serial group (12) both installed on the bracket (3), the first serial group (11) and the second serial group (12) each comprises a first serial row (101) and a second serial row (102) arranged oppositely in a first direction perpendicular to a second direction in which the first serial group and the second serial group is arranged, and the first serial group (11) and the second serial group (12) each corresponds to a cell group (51); and the collection assembly (120) comprises a first collection line (13) and a second collection line (14) each installed on the bracket (3) and arranged oppositely in a direction in which the first collection line and the second collection line is arranged; and
wherein two first serial rows (101) of both the first serial group (11) and the second serial group (12) are located at a side of the first collection line (13) away from the second collection line (14) and electrically connected to the first collection line (13), and two second serial rows (102) of both the first serial group (11) and the second serial group (12) are located at a side of the second collection line (14) away from the first collection line (13) and electrically connected to the second collection line (14).

2. The battery module collection mechanism (1) of claim 1, **characterized in that** the first collection line (13) comprises two first connection portions (131) and a first buffer portion (132) connected between the two first connection portions (131), the two first connection portions (131) are connected to the two first serial rows (101) of both the first serial group (11) and the second serial group (12), respectively, and the first buffer portion (132) is provided with a first groove (133) toward the bracket (3); and
the second collection line (14) comprises two second connection portions (141) and a second buffer portion (142) connected between the two second connection portions (141), the two second connection portions (141) are connected to the two second serial rows (102) of both the first serial group (11) and the second serial group (12), respectively, and the second buffer portion (142) is provided with a second groove (143) toward the bracket (3).

3. The battery module collection mechanism (1) of claim 2, **characterized in that**, in an extension direction of the first collection line (13), a distance between the first groove (133) and the first serial row (101) of the first serial group (11) is equal to a distance between the first groove (133) and the first serial row (101) of the second serial group (12); and in an extension direction of the second collection line (14), a distance between the second groove (143) and the second serial row (102) of the first serial group (11) is equal to a distance between the second groove (143) and the second serial row (102) of the second serial group (12).

4. The battery module collection mechanism (1) of claim 3, **characterized in that** a virtual connection line between a center of the second groove (143) and a center of the first groove (133) is perpendicular to the extension direction of the first collection line (13).

5. The battery module collection mechanism (1) of any of claims 1-4, **characterized in that** the serial assembly (110) further comprises a first connection member (21) for connecting the first serial group (11) and the second serial group (12).

6. The battery module collection mechanism (1) of claim 5, **characterized in that** the first collection member (21) is connected between two first serial rows (101) of both the first serial group (11) and the second serial group (12) or connected between two second serial rows (102) of both the first serial group (11) and the second serial group (12); and the first connection member (21) is provided with a protrusion (24) away from the bracket (3).

7. The battery module collection mechanism (1) of claim 6, **characterized in that** the first connection member (21) is provided with two recesses (25) on both sides of the protrusion (24), and the two recesses (25) are recessed toward the bracket (3).

8. The battery module collection mechanism (1) of claim 7, **characterized in that** a depth of each of the recesses (25) is equal to a height of the protrusion (24).

9. The battery module collection mechanism (1) of claim 1, **characterized in that** the serial assembly (110) comprises two connection circuit boards (4) respectively connected to the first collection line (13) and the second collection line (14).

10. The battery module collection mechanism (1) of claim 1, **characterized in that** the bracket (3) are provided with a plurality of collection line installing grooves (31) for installing collection assemblies (120) and a connection member installing groove (32) for installing the first connection member (21), wherein the collection line installing grooves (31) and the connection member installing groove (32) are designed based on shapes of the collection assemblies (120) and the connection member (21).

11. A battery module, **characterized in that** the battery module comprises two or more cell grouping assemblies (5) and the battery module collection mechanism (1) of any one of claims 1 to 10 provided in a number corresponding to a number of the cell grouping assemblies (5), wherein each of the cell grouping assemblies (5) comprises two or more cell groups (51), and the two cell groups (51) are electrically connected to the first serial group (11) and the second serial group (12), respectively; and
the serial assembly (110) further comprises a first connection member (21) for connecting the first serial group (11) and the second serial group (12), wherein the first connection member is configured to connect the two cell groups (51) in series.

12. The battery module of claim 11, **characterized in that** the battery module further comprises an integrated connection assembly comprising a first integrated member (22), wherein each of the cell grouping assemblies (5) comprises four cell groups (51), the collection group (100) is provided in two, the first integrated member (22) is configured to connect the two second serial rows (102) of the two collection groups (100) when the first connection member (21) is configured to connect the two first serial row (101) of both the first serial group (11) and the second serial group (12), and the first integrated member (22) is configured to connect the two first serial rows (101) of the two collection groups (100) when the first connection member (21) is configured to connect the two second serial row (102) of both the first serial group (11) and the second serial group (12).

13. The battery module of claim 12, **characterized in that** the integrated connection assembly further comprises a second integrated member (23) disposed on a side of the first serial row (101) away from the first integrated member (22), the two second serial rows (102) of the two first serial groups (11) of the two battery module collection mechanisms (1) are interconnected with each other by the second integrated member (23) when the first connection member (21) is configured to connect the two first serial rows (101) of both the first serial group (11) and the second serial group (12), and the two first serial rows (101) of the two first serial groups (11) of the two battery module collection mechanisms (1) are interconnected with each other by the second integrated member (23) when the first connection member (21) is configured to connect the two second serial rows (102) of both the first serial group (11) and the second serial group (12).
